# EUROPÄISCHE PATENTANMELDUNG

(11) **EP 1 475 693 A2**
(43) Veröffentlichungstag der Anmeldung: **10.11.2004**
(21) Anmeldenummer: 04100437.5
(22) Anmeldetag: 05.02.2004
(51) Int. Cl.: G06F 3/033

(54) **Kombinierte Anzeige- und Eingabeeinrichtung für Kraftfahrzeuge**

(30) Priorität: 21.03.2003 DE 10312812
(71) Anmelder: SIEMENS AKTIENGESELLSCHAFT, 80333 München (DE)
(72) Erfinder: Nguyen Thien, Nhu, 93057 Regensburg (DE); Basche, Boris, 93170 Bernhardswald (DE)

(57) **Zusammenfassung**

Die Erfindung betrifft eine kombinierte Anzeige- und Eingabeeinrichtung (2) eines Informations- und/oder Kommunikationssystems eines Kraftfahrzeuges, die als berührungsempfindlicher Bildschirm ausgebildet ist. Erfindungsgemäß ist vorgesehen, dass der berührungsempfindliche Bildschirm mindestens zwei Bereiche aufweist, nämlich einen ersten Bereich (16), in dem Bedienelemente grafisch darstellbar sind, wobei durch Berührung des grafisch dargestellten Bedienelementes eine mit dem Bedienelement verknüpfte Funktion des Informations- und/oder Kommunikationssystems aktivierbar ist, sowie einem als Handschrifteingabefläche ausgebildeten zweiten Bereich (17), der mit einem Handschrifterkennungsmodul (3) verbunden ist, wobei die kombinierte Anzeige- und Eingabeeinrichtung (2) für den Festeinbau in das Kraftfahrzeug baulich getrennt von einem Steuermodul (1) der Anzeige- und Eingabeeinrichtung (2) ausgebildet ist.

## Beschreibung

Die Erfindung betrifft eine kombinierte Anzeige- und Eingabeeinrichtung eines Informations- und/oder Kommunikationssystems eines Kraftfahrzeuges, die als berührungsempfindlicher Bildschirm ausgebildet ist.

Eine derartige Anzeige- und Eingabeeinrichtung ist aus der EP 1 065 472 A2 bekannt. Ein berührungsempfindlicher Bildschirm wird auch als Touchscreen bezeichnet. Der Touchscreen ist Bestandteil einer mobilen Informationseinrichtung, beispielsweise eines sogenannten Persönlichen Digitalen Assistenten (PDA). Die Informationseinrichtung ist daher nicht für den Festeinbau in ein Kraftfahrzeug vorgesehen und auch diesbezüglich nicht optimiert. Über die nähere Ausgestaltung des Touchscreens werden keine Angaben gemacht.

Aus der DE 35 11 353 A1 ist eine Anordnung zum Eingeben und Verarbeiten von Zeichen und/oder grafischen Mustern bekannt. Die Anordnung weist eine Eingabeeinheit, die als transparente, flache, ebene Fläche ausgebildet ist, eine Anzeigeeinheit, die ebenfalls als flache und ebene Fläche ausgebildet ist und unterhalb der Eingabefläche angeordnet ist, sowie eine Steuereinheit, die ebenfalls flach ausgebildet ist und unterhalb der Anzeigeeinheit angeordnet ist, auf. Auf der Anzeigeeinheit ist eine Bedienzeile darstellbar, die mittels der Eingabeeinheit manuell auswählbaren Funktionen zugeordnet ist. Die Steuereinheit stellt die mittels der Eingabeeinheit eingegebenen Zeichen und/oder grafischen Muster auf der Ausgabeeinheit dar. Die Eingabeeinheit kann darüber hinaus eine Eingabefläche für handschriftliche Zeichen und/oder grafische Muster, insbesondere Handzeichnungen, aufweisen. Die Anordnung soll großflächig ausgebildet sein, um auch handschriftlich eingegebene Zeichen gut korrigieren zu können. Die Anordnung ist für die Verwendung als Schreib- oder Zeichenblock, als Textstation, als Rechengerät, als persönlicher Computer oder als Ausgabegerät für Zeichnungen (Plotter) vorgesehen. Beispielhaft ist als Größenangabe das Format DIN A4 genannt.

Darüber hinaus sind sogenannte "Touchpads" als Eingabeeinrichtungen, insbesondere für tragbare Computer, bekannt. Touchpads weisen eine berührungsempfindliche Fläche auf, die jedoch nicht mit einer Anzeigefläche hinterlegt ist. Touchpads dienen beispielsweise zum Verschieben eines Zeigers auf einem separaten Bildschirm.

Die beschriebenen Anordnungen sind nicht für den Einsatz in einem Kraftfahrzeug optimiert. Im Kraftfahrzeug besteht das Problem eines begrenzten Einbauplatzes im Armaturenbrett oder in der Mittelkonsole. Um das Problem des begrenzten Einbauplatzes im Kraftfahrzeug zu lösen, kann eine zentrale Bedieneinheit für mehrere Kraftfahrzeugkomponenten oder der getrennte Einbau von Bedientasten und eines Bildschirms vorgesehen sein.

Aufgabe der Erfindung ist es daher, eine kombinierte Anzeigeund Eingabeeinrichtung derart weiterzubilden, dass sie für den Einsatz in einem Kraftfahrzeug optimiert ist und neben einer einfachen Eingabefunktion auch eine Wiedergabefunktion bei geringem Platzbedarf im Armaturenbrett bzw. der Mittelkonsole zur Verfügung stellt.

Die Aufgabe wird bei einer gattungsgemäßen kombinierten Anzeige- und Eingabeeinrichtung dadurch gelöst, dass der berührungsempfindliche Bildschirm mindestens zwei Bereiche aufweist, nämlich einen ersten Bereich, in dem Bedienelemente grafisch darstellbar sind, wobei durch Berührung des grafisch dargestellten Bedienelementes eine mit dem Bedienelement verknüpfte Funktion des Informations- und/oder Kommunikationssystems aktivierbar ist, sowie einem als Handschrifteingabefläche ausgebildeten zweiten Bereich, der mit einem Handschrifterkennungsmodul verbunden ist, wobei die kombinierte Anzeige- und Eingabeeinrichtung für den Festeinbau in das Kraftfahrzeug baulich getrennt von einem Steuermodul der Anzeige- und Eingabeeinrichtung ausgebildet ist.

Bei der erfindungsgemäßen Einrichtung sind die Anzeige- und Eingabefunktion in der Anzeige- und Eingabeeinrichtung miteinander verknüpft, während das Steuermodul der Anzeige- und Eingabeeinrichtung baulich von dieser getrennt und an einem beliebigen Ort im Kraftfahrzeug eingebaut sein kann. Der Platzbedarf im Bereich der Mittelkonsole oder des Armaturenbrettes wird dadurch deutlich verringert.

Die Anzeige- und Eingabeeinrichtung weist zwei unterschiedliche Eingabebereiche auf. In einem ersten Bereich sind Bedienelemente graphisch darstellbar. Durch Berührung eines der grafisch dargestellten Bedienelemente wird eine mit dem jeweiligen Bedienelement verknüpfte Funktion des Informations- und/oder Kommunikationssystems aktiviert. Weiterhin ist ein zweiter Eingabebereich vorhanden, der als Handschrifteingabefläche dient und mit einem Handschrifterkennungsmodul verbunden ist. In diesen zweiten Bereich können handschriftliche Eintragungen vorgenommen werden. Somit kann auf Bedienelemente zur Eingabe von alphanumerischen Zeichen vollständig verzichtet werden. Hierdurch verringert sich der Platzbedarf der Eingabeeinrichtung weiter. Zudem kann der berührungsempfindliche Bildschirm auch ganz oder teilweise als Anzeigefläche verwendet werden. Dies bedeutet, dass dieselbe Fläche je nach Status des Informations- und/oder Kommunikationssystems einmal als Eingabefläche und zum anderen als Ausgabefläche verwendbar ist. Auch durch diese Doppelnutzung der Fläche wird eine Reduzierung des benötigten Einbauplatzes für die Anzeige- und Eingabeeinrichtung erreicht.

In einer besonderen Ausführungsform ist vorgesehen, dass der zweite Bereich durch das Steuermodul hinsichtlich der Handschrifteingabe aktivierbar und deaktivierbar ist. Somit kann sichergestellt werden, dass nur dann, wenn das System von dem Benutzer Eingaben erwartet, diese aus auch vorgenommen werden können. Ein versehentliches Berühren des zweiten Bereiches führt daher nicht zu Fehlfunktionen des Informations- und/oder Kommunikationssystems. Weiterhin kann der zweite Bereich im deaktivierten Zustand als reiner Anzeigebereich genutzt werden. Um dem Benutzer eine Rückmeldung zu geben, ob der zweite Bereich als Eingabebereich aktiviert oder deaktiviert ist, kann insbesondere eine unterschiedliche Farbgebung des zweiten Bereiches im aktivierten und deaktivierten Zustand vorgesehen sein. Hierdurch wird die Bedienung weiter vereinfacht.

In einer weiteren Ausführungsform ist vorgesehen, dass die kombinierte Anzeige- und Eingabeeinrichtung einen dritten Bereich aufweist, der als reiner Anzeigebereich ausgebildet ist. Hierdurch kann auch dann, wenn der erste und zweite Bereich als Eingabebereiche aktiviert sind, noch eine Anzeige von Informationen erfolgen. Beispielsweise kann der Nutzer eine Telefonnummer in den zweiten Bereich handschriftlich eingeben, wobei die von dem Handschrifterkennungsmodul erkannten Ziffern in dem dritten, reinen Anzeigebereich zur Kontrolle wiedergegeben werden.

In einer weiteren Ausführungsform ist vorgesehen, dass das Informations- und/oder Kommunikationssystem zur automatischen Ergänzung einer von dem Handschrifterkennungsmodul erkannten Zeichenkette zu einem vollständigen Wort durch Vergleich der erkannten Zeichenkette mit in einem Speicher abgelegten Worten ausgelegt ist. Diese Funktion kann beispielsweise die Eingabe von Zielorten eines Navigationssystems erleichtern. Der Benutzer gibt die ersten Buchstaben des gewünschten Zielortes ein. Von dem Handschrifterkennungsmodul wird die so eingegebene Zeichenkette erkannt und mit abgespeicherten möglichen Zielorten verglichen. Wird hierbei festgestellt, dass nur ein einziger abgespeicherter Zielort die erkannte Zeichenkette als Anfangsbestandteil enthält, so kann die Zeichenkette automatisch ergänzt werden, wodurch der vollständige Zielort ausgegeben wird. Hierdurch wird die Eingabe eines Zielortes wesentlich beschleunigt.

In einer weiteren Ausführungsform ist vorgesehen, dass das Informations- und/oder Kommunikationssystem ein Textumsetzungsmodul zur Umsetzung eines in den zweiten Bereich eingegebenen Textes in Sprache aufweist. Hierdurch kann beispielsweise ein eingegebener Zielort oder eine eingegebene Telefonnummer zur Kontrolle akustisch wiedergegeben werden.

Die Möglichkeit der Nutzung des zweiten Bereiches sowohl als Eingabefläche als auch als Anzeigefläche kann besonders vorteilhaft bei Navigationssystemen genutzt werden. Wie oben bereits beschrieben, kann im Falle der Nutzung als Eingabesystem ein Zielort in den zweiten Bereich eingegeben werden. Zusätzlich kann dieser zweite Bereich aber auch als Anzeigebereich zum Anzeigen einer Karte oder von Navigationshinweisen genutzt werden. Weiterhin ist eine besondere Eingabemöglichkeit eines Zielortes dadurch möglich, dass eine Karte dargestellt wird und direkt auf der Karte durch Antippen eines dort dargestellten Ortes dieser als Zielort ausgewählt wird.

Der Platzbedarf der erfindungsgemäßen Anzeige- und Eingabeeinrichtung ist daher geringer als der Platzbedarf einer reinen Anzeige und einer reinen Eingabeeinrichtung. Durch Kombination weiterer Komponenten, wie beispielsweise eines Audiosystems und eines Telefonmoduls mit dem Navigationssystem zu einem Multimediasystem entfällt zudem die Notwendigkeit getrennter Eingabeeinrichtungen für die einzelnen Komponenten. Das Multimediasystem ist dabei insbesondere zur Erkennung vom im zweiten Bereich handschriftlich eingegebenen Telefonnummern und Zieladressen ausgelegt.

Die Erfindung wird nachfolgend anhand eines Ausführungsbeispiels und der Zeichnung näher erläutert. Es zeigen:
- Fig. 1: die wesentlichen Komponenten eines Kraftfahzeugmultimediasystems,
- Fig. 2: den Einbau einer Anzeige- und Eingabeeinrichtung in der Mittelkonsole eines Kraftfahrzeuges,
- Fig. 3-5: die Oberfläche der Anzeige- und Eingabeeinrichtung in verschiedenen Betriebszuständen.

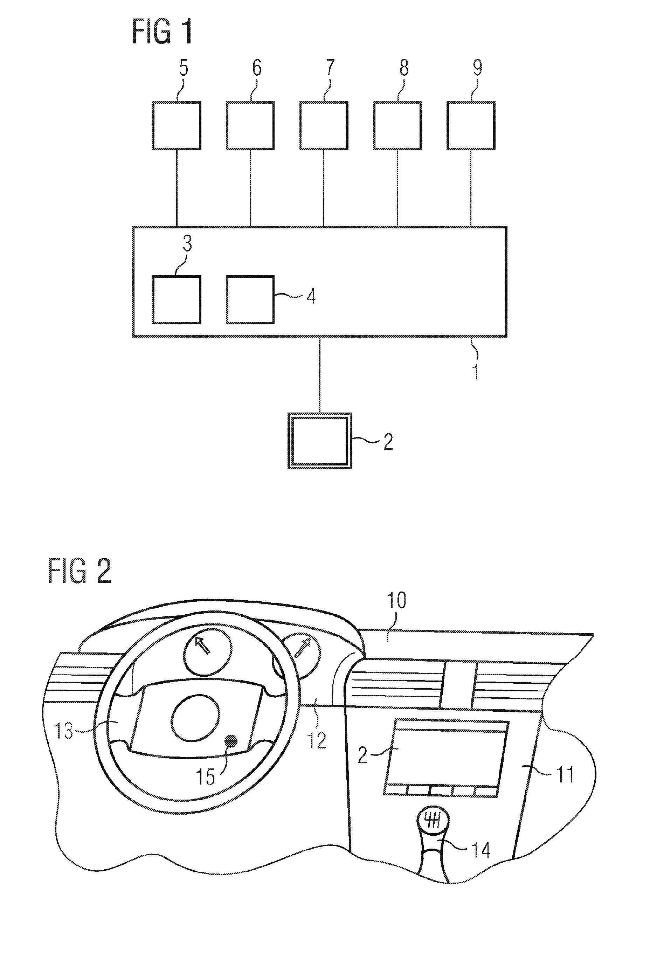

Figur 1 zeigt ein vereinfachtes Blockschaltbild des Kraftfahrzeugmultimediasystems. Die kombinierte Anzeige- und Eingabeeinrichtung 2 ist mit dem zentralen Steuermodul 1 verbunden. Als weitere Komponenten des Multimediasystems sind mit dem Steuermodul 1 ein Navigationssystem 5, ein Telefonmodul 6, ein Radioempfänger 7, ein Fernsehempfänger 8 und ein DVD-Abspielgerät 9 verbunden. Das Steuermodul 1 koordiniert die einzelnen Komponenten, wobei als zentrale Eingabeeinrichtung die Anzeige- und Eingabeeinrichtung 2 dient. Die Anzeige- und Eingabeeinrichtung 2 dient weiterhin auch als optisches Ausgabemedium. Weitere Bildschirmgeräte und akustische Ausgabegeräte können mit dem Steuermodul 1 verbunden sein. Das Steuermodul 1 enthält einen Mikroprozessor und die erforderlichen Speicherelemente. Bestandteil des Steuermoduls 1 ist ferner ein Handschrifterkennungsmodul 3, sowie ein Textumsetzungsmodul 4. Das Handschrifterkennungsmodul 3 dient zur Erkennung von handschriftlich vorgenommenen Eingaben auf der Anzeige- und Eingabeeinrichtung 2. Das Textumsetzungsmodul 4 setzt Eingaben, die über die Anzeigeund Eingabeeinrichtung 2 vorgenommen werden, in Sprache um, so dass diese über Lautsprecher ausgegeben werden können. Bei dem Handschrifterkennungsmodul 3, dem Textumsetzungsmodul 4, dem Navigationssystem 5, dem Telefonmodul 6, dem Radioempfänger 7, dem Fernsehempfänger 8 und dem DVD-Laufwerk 9 sowie deren Zusammenschaltung zu einem Multimediasystem handelt es sich um an sich bekannte technische Geräte.

Die Anzeige- und Eingabeeinrichtung 2 ist als berührungsempfindlicher Bildschirm ausgelegt. Der Aufbau berührungsempfindlicher Bildschirme ist an sich bekannt. Ein derartiger Bildschirm setzt sich zusammen aus der eigentlichen Anzeigeeinrichtung, beispielsweise in Form eines LCD, auf die zusätzlich eine Schicht mit einem Berührungssensor aufgebracht ist. Der Berührungssensor liefert Signale, die von einer Steuereinrichtung ausgewertet werden. Wird zum Beispiel auf dem LCD eine Taste abgebildet, so wird über den Berührungssensor registriert, ob ein Benutzer den Bildschirm im Bereich der abgebildeten Taste berührt. Ist dies der Fall, so wird seitens der Steuereinrichtung ein Signal generiert, das ein "Drücken" des Bedienelementes signalisiert. Es sind verschiedene Ausgestaltungen des Berührungssensors bekannt, beispielsweise als Oberflächenwellensensor, Widerstandssensor, Kapazitätssensor, Infrarotsensor oder piezoelektrischer Sensor. Werden auf dem berührungsempfindlichen Bildschirm Bedienelemente dargestellt, so wird dieser häufig auch als "Touchscreen" bezeichnet.

Figur 2 zeigt eine Teilansicht eines Kraftfahrzeuginnenraumes mit einem Armaturenbrett 10, einer Mittelkonsole 11, einem Kombiinstrument 12, einem Lenkrad 13 und einem Schalthebel 14. In die Mittelkonsole 11 ist die erfindungsgemäße kombinierte Anzeige- und Eingabeeinrichtung 2 integriert. Das Steuermodul 1 sowie die weiteren Komponenten des Multimediasystems können an beliebiger Stelle im Kraftfahrzeug platziert sein. Lediglich die kombinierte Anzeige- und Eingabeeinrichtung muss im Bedienbereich des Fahrers angeordnet sein. Durch diese getrennte Ausgestaltung der Anzeige- und Eingabeeinrichtung 2 und der sonstigen Komponenten des Multimediasystems kann bereits der im Bereich des Armaturenbrettes 10 und der Mittelkonsole 11 vorhandene Platz effektiv genutzt werden. Die Bedienung des Multimediasystems erfolgt über die kombinierte Anzeige- und Eingabeeinrichtung 2, wobei lediglich zum Ein- und Ausschalten des Multimediasystems ein separater Schalter 15 im Lenkrad 13 vorgesehen ist.

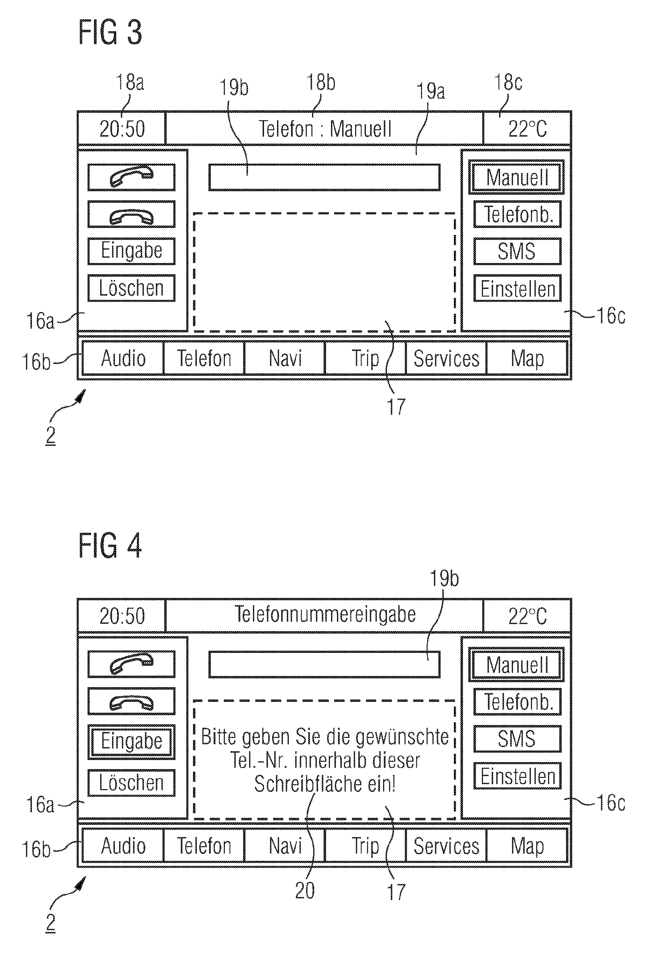

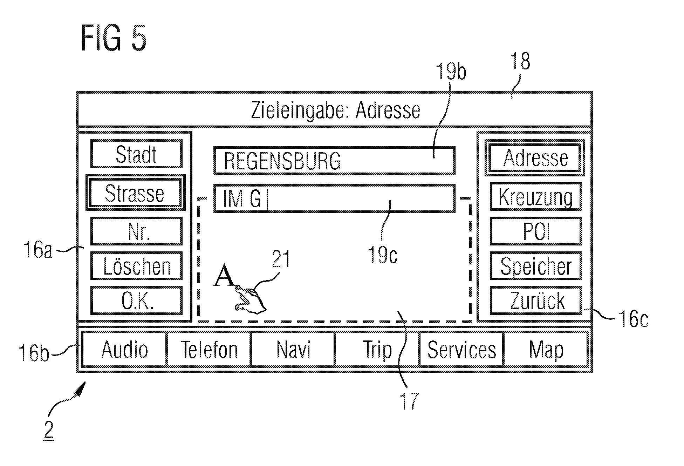

Figur 3 zeigt den sichtbaren Bereich der im Kraftfahrzeug eingebauten Anzeige- und Eingabeeinrichtung 2. Die Anzeige- und Eingabeeinrichtung 2 weist unterschiedliche Bereiche auf, nämlich einen ersten Bereich 16, in dem Bedienelemente grafisch dargestellt sind. Im Ausführungsbeispiel ist der erste Bereich 16 in drei Teilbereiche 16a bis 16c aufgeteilt. Im Bereich 16b sind Funktionstasten grafisch dargestellt, mit denen die verschiedenen Grundfunktionen des Multimediasystems aktiviert werden können. Im gezeigten Beispiel sind dies die Bedienelemente "Audio", "Telefon", "Navi", "Trip", "Services", "Map". In den Teilbereichen 16a und 16c werden dagegen Bedienelemente abhängig von der gewählten Grundfunktion grafisch dargestellt. In Figur 3 sind dies Bedienelemente für die gewählte Telefonfunktion. Ein zweiter Bereich 17 der Anzeige- und Eingabeeinrichtung 2 ist als Handschrifteingabefläche ausgebildet. In diesem Bereich können handschriftliche Eingaben gemacht werden. Beispielsweise kann der Benutzer hier mit einem Finger die Ziffern einer Telefonnummer eingeben. Weiterhin weist die Anzeige- und Eingabeeinrichtung 2 einen dritten Bereich 18 auf, der als reiner Anzeigebereich genutzt wird. Im Ausführungsbeispiel ist dieser Anzeigebereich 18 in drei Teilbereiche 18a bis 18c unterteilt. Im Bereich 18a wird die aktuelle Uhrzeit angezeigt. Im Bereich 18b wird die aktuell gewählte Funktion des Multimediasystems angezeigt, während im Bereich 18c eine Temperaturanzeige erfolgt. Darüber hinaus gibt es einen weiteren Anzeigebereich 19. Der Anzeigebereich 19 kann zusammen mit dem zweiten Bereich 17 beispielsweise zur Anzeige einer Kartendarstellung bei gewählter Navigationsfunktion dienen. Der zweite Eingabebereich 17 wird daher in doppelter Weise genutzt. Zum einen wird der zweite Bereich 17 in einer Eingabefunktion als Handschrifteingabefläche genutzt, zum anderen wird der zweite Bereich 17 dann, wenn keine Eingabe vom Benutzer erwartet wird, als Ausgabebereich mitbenutzt. Durch diese Doppelnutzung des Bereiches 17 wird eine besonders kompakte Anzeige- und Eingabeeinrichtung bereitgestellt. Abhängig davon, ob der zweite Bereich 17 als Eingabefläche oder Anzeigefläche dient, kann die Farbgebung dieses Bereiches unterschiedlich sein. Alternativ kann durch einen Texthinweis (20, Fig. 4) oder ein Symbol (21, Fig. 5) oder durch eine Kombination der drei genannten Möglichkeiten auf den Status des zweiten Bereichs 17 hingewiesen werden. Hierdurch erhält der Fahrer eine schnelle Rückmeldung, ob im gegenwärtigen Zustand des Multimediasystems eine Eingabe im Eingabebereich 17 möglich ist.

Figur 4 zeigt die Anzeige- und Eingabeeinrichtung 2 bei der Eingabe einer Telefonnummer. Der Benutzer gibt die Telefonnummer handschriftlich in den zweiten Bereich 17 ein. Durch das Handschrifterkennungsmodul 3 werden die handschriftlich eingegebenen Ziffern erkannt und die erkannten Ziffern anschließend im Anzeigebereich 19b wiedergegeben. Durch farbliche Hervorhebung der im Anzeigebereich 16a und 16c grafisch dargestellten Bedienelemente kann dem Fahrer signalisiert werden, welche Funktion gerade ausgewählt ist. In dem in Figur 4 gezeigten Beispiel sind hierzu die Bedienelemente für "Eingabe" und "manuell" optisch von den sonstigen Bedienelementen abgehoben. Zur Kontrolle, ob ein eingegebenes Zeichen von dem Handschrifterkennungsmodul 3 erkannt wurde, kann eine akustische Rückmeldung ein Form eines Bestätigungstones ausgegeben werden.

Figur 5 zeigt die Ansicht der Anzeige- und Eingabeeinrichtung 2 im Modus Navigation während der Eingabe einer Zieladresse. Im reinen Anzeigebereich 18 wird darauf hingewiesen, dass nun die Zieladresse eingegeben werden kann. Im ersten Teilbereich 16b werden wie in den Figuren 3 und 4 die Bedienelemente für die Grundfunktionen des Multimediasystems grafisch dargestellt. In den Teilbereichen 16a und 16c werden nun jedoch Bedienelemente grafisch dargestellt, die der Komponente Navigation zugeordnet sind. Dies sind im Bereich 16c Bedienelemente für die Angabe der Art der Zieleingabe. Ausgewählt ist hier "Adresse". Im Teilbereich 16a sind Bedienelemente grafisch dargestellt, über die die einzelnen Bestandteile der Adresseingabe gewählt werden können. In gezeigten Beispiel ist die Eingabe der Straße ausgewählt. Der Benutzer gibt den Straßennamen handschriftlich in den zweiten Bereich 17 ein. Im Anzeigebereich 19c werden die von dem Handschrifterkennungsmodul 3 erkannten Buchstaben des Straßennamens wiedergegeben. Dieses Beispiel zeigt eine weitere Besonderheit der Anzeige- und Eingabeeinrichtung. Bei Eingabe der Zieladresse werden Anzeigefelder für den Stadtnamen, den Straßennamen und die Hausnummer benötigt. Diese Anzeigefelder sind im Ausführungsbeispiel untereinander angeordnet, wobei die Anzeigefelder, hier das Anzeigefeld 19c, auch mit dem zweiten Teilbereich 17, in dem die Handschrifteingabe erfolgt, überlappen können. Dieses Beispiel zeigt deutlich die flexible Nutzung der Anzeige- und Eingabeeinrichtung 2 sowohl für die Eingabe als auch für die Anzeige von Informationen.

## Patentansprüche

1. Kombinierte Anzeige- und Eingabeeinrichtung eines Informations- und/oder Kommunikationssystems eines Kraftfahrzeugs, die als berührungsempfindlicher Bildschirm ausgebildet ist, **dadurch gekennzeichnet, dass** der berührungsempfindliche Bildschirm mindestens zwei Bereiche aufweist, nämlich einen ersten Bereich (16), in dem Bedienelemente grafisch darstellbar sind, wobei durch Berührung des grafisch dargestellten Bedienelementes eine mit dem Bedienelement verknüpfte Funktion des Informations- und/oder Kommunikationssystems aktivierbar ist, sowie einem als Handschrifteingabefläche ausgebildeten zweiten Bereich (17), der mit einem Handschrifterkennungsmodul (3) verbunden ist, wobei die kombinierte Anzeige- und Eingabeeinrichtung für den Festeinbau in das Kraftfahrzeug baulich getrennt von einem Steuermodul (1) der Anzeige- und Eingabeeinrichtung (2) ausgebildet ist.

2. Kombinierte Anzeige- und Eingabeeinrichtung nach Anspruch 1, **dadurch gekennzeichnet, dass** der zweite Bereich (17) durch das Steuermodul (1) hinsichtlich der Handschrifteingabe aktivierbar und deaktivierbar ist.

3. Kombinierte Anzeige- und Eingabeeinrichtung nach einem der vorhergehenden Ansprüche, **dadurch gekennzeichnet, dass** der zweite Bereich (17) im für die Handschrifteingabe deaktivierten Zustand als Anzeigebereich nutzbar ist.

4. Kombinierte Anzeige- und Eingabeeinrichtung nach einem der vorhergehenden Ansprüche, **dadurch gekennzeichnet, dass** die kombinierte Anzeige- und Eingabeeinrichtung einen dritten Bereich (18) aufweist, der als reiner Anzeigebereich ausgebildet ist.

5. Kombinierte Anzeige- und Eingabeeinrichtung nach einem der vorhergehenden Ansprüche 2 bis 4, **dadurch gekennzeichnet, dass** der zweite Bereich (17) im aktivierten und deaktivierten Zustand unterschiedliche Farbgebung aufweist oder durch einen Texthinweis (20) oder ein Symbol (21) oder eine Kombination der genannten Möglichkeiten auf den Status des zweiten Bereichs hingewiesen wird.

6. Kombinierte Anzeige- und Eingabeeinrichtung nach einem der vorhergehendenAnsprüche, **dadurch gekennzeichnet, dass** das Informations- und/oder Kommunikationssystem zur automatischen Ergänzung einer von dem Handschrifterkennungsmodul (3) erkannten Zeichenkette zu einem vollständigen Wort durch Vergleich der erkannten Zeichenkette mit in einem Speicher abgelegten Worten ausgelegt ist.

7. Kombinierte Anzeige- und Eingabeeinrichtung nach einem der vorhergehenden Ansprüche, **dadurch gekennzeichnet, dass** das Informations- und/oder Kommunikationssystem ein Textumsetzungsmodul (4) zur Umsetzung eines in den zweiten Bereich eingegebenen Textes in Sprache aufweist.

8. Kombinierte Anzeige- und Eingabeeinrichtung nach einem der vorhergehenden Ansprüche, **dadurch gekennzeichnet, dass** von dem Handschrifterkennungsmodul (3) erkannte alphanumerische Zeichen in einem Anzeigebereich (19) der Anzeige- und Eingabeeinrichtung wiedergegeben werden.

9. Kombinierte Anzeige- und Eingabeeinrichtung nach einem der vorhergehenden Ansprüche, **dadurch gekennzeichnet, dass** das Informations- und/oder Kommunikationssystem ein Navigationssystem (5) ist oder beinhaltet, wobei der zweite Bereich (17) auch zur Anzeige einer Karte oder von Navigationshinweisen genutzt wird.

10. Kombinierte Anzeige- und Eingabeeinrichtung nach einem der vorhergehenden Ansprüche, **dadurch gekennzeichnet, dass** das Informations- und/oder Kommunikationssystem ein Multimediasystem ist, das zumindest ein Audiosystem (7), ein Telefonmodul (6) und ein Navigationssystem (5) umfasst, wobei das Multimediasystem zur Erkennung von im zweiten Bereich (17) handschriftlich eingegebenen Telefonnummern und Zieladressen ausgelegt ist.
